Europäisches Patentamt

European Patent Office

Office européen des brevets

(11) Publication number: **0 079 251**
**B1**

(12) **EUROPEAN PATENT SPECIFICATION**

(45) Date of publication of patent specification: **31.01.90**

(51) Int. Cl.⁵: **G 06 K 9/80**

(21) Application number: **82401438.5**

(22) Date of filing: **30.07.82**

(54) Geometric character recognition using skeleton and stroke width representation.

(30) Priority: **09.11.81 US 301117**

(43) Date of publication of application:
**18.05.83 Bulletin 83/20**

(45) Publication of the grant of the patent:
**31.01.90 Bulletin 90/05**

(84) Designated Contracting States:
**BE DE FR GB IT NL**

(56) References cited:
**US-A-4 015 239**

**IEEE TRANSACTIONS ON SYSTEMS, MAN,
AND CYBERNETICS, vol. 4, no. 6, pages 570-575,
IEEE, New York, US; P. SIY et al.: "Fuzzy logic
for handwritten numeral character recognition"**

**THE MARCONI REVIEW, vol. 32, no. 172, 1969,
pages 3-20, Great Baddow, GB; K.H. HOSKING
et al.: " A feature detection method for optical
character recognition"**

(73) Proprietor: **BURROUGHS CORPORATION (a
Delaware corporation)
Burroughs Place
Detroit Michigan 48232 (US)**

(72) Inventor: **Siy, Pepe
7742 Amboy Road
Dearborn Heights, Mi 48127 (US)**
Inventor: **Young, James Ching-Ting
10261 N.W. 35th Street
Coral Springs, FL 33065 (US)**

(74) Representative: **Cabinet Pierre HERRBURGER
115, Boulevard Haussmann
F-75008 Paris (FR)**

Courier Press, Leamington Spa, England.

## Description

Background of the invention
1. Field of the invention
    The invention relates to a character recognition system for use with document processing machines, and the like. It has utility for use with printed characters in many formats and for unconstrained handwritten characters. It employs a character code recognition technique, which may be called a geometric technique, making use of skeleton and stroke width data in digital form which is compared with data in standard character code patterns to enable identification. Character codes not identified initially by comparison with standard character codes are processed further and submitted to further tests to identify additional characters.

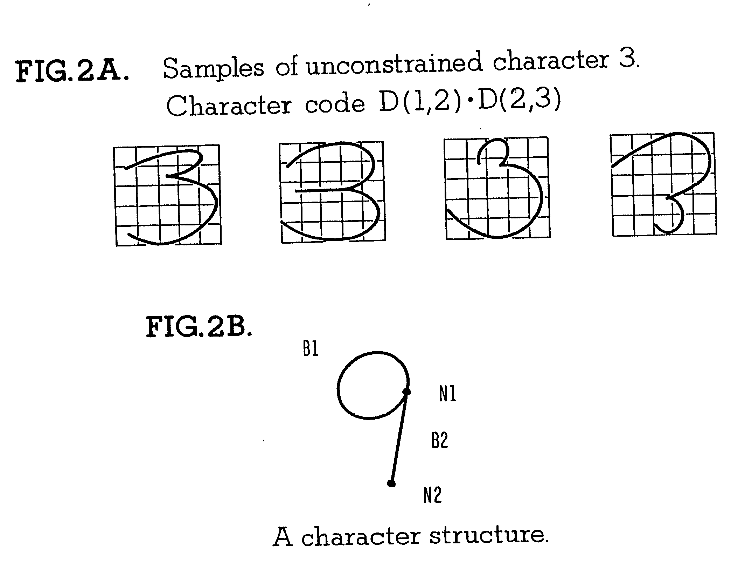

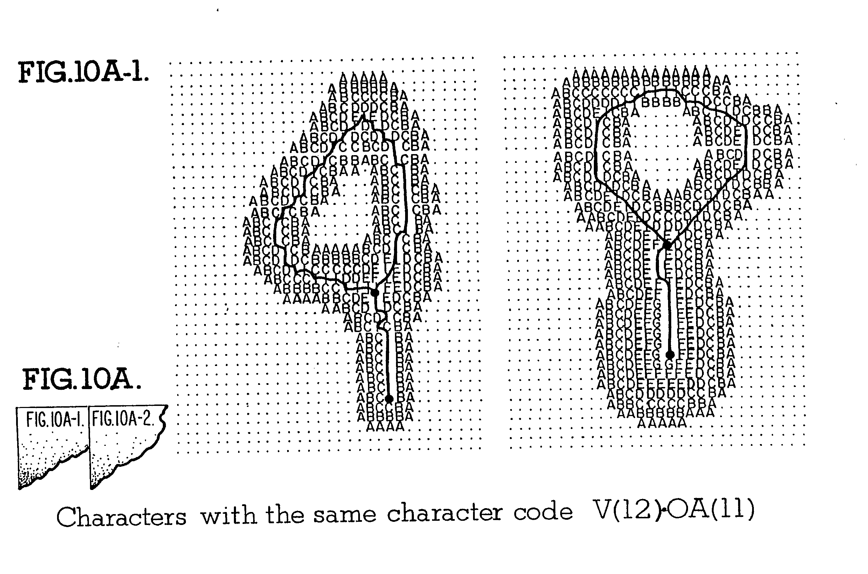

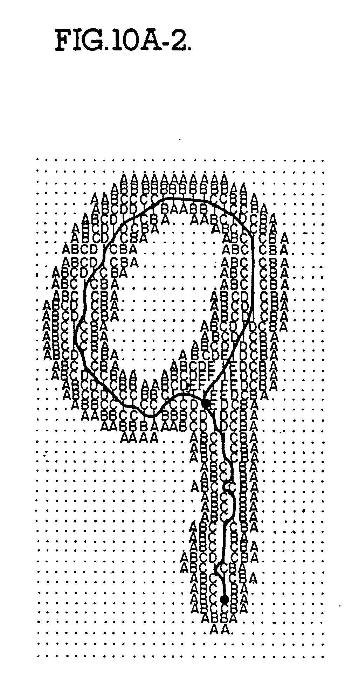

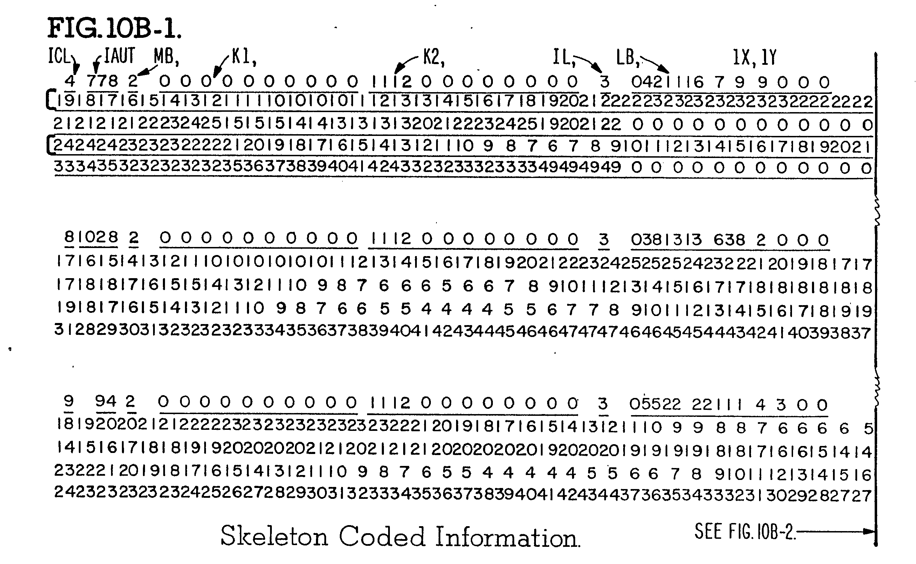

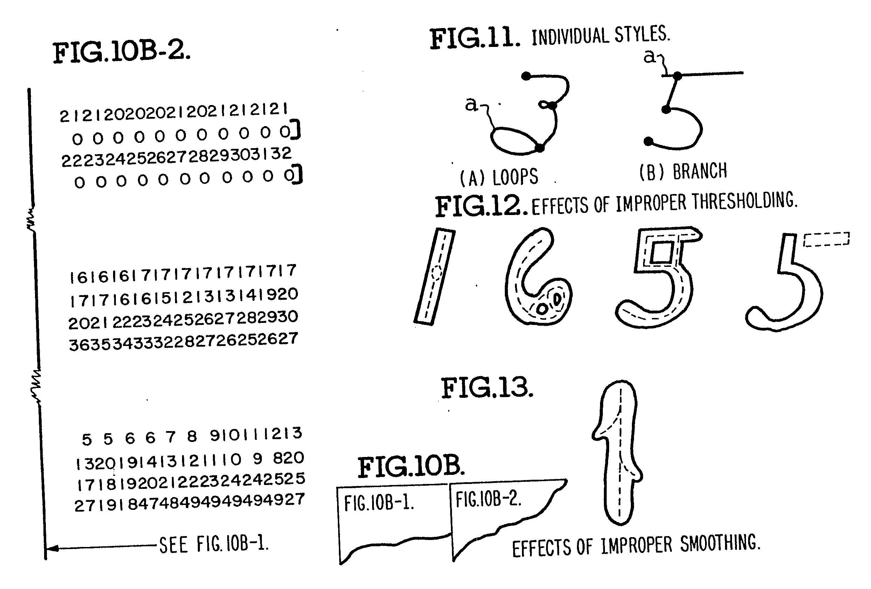

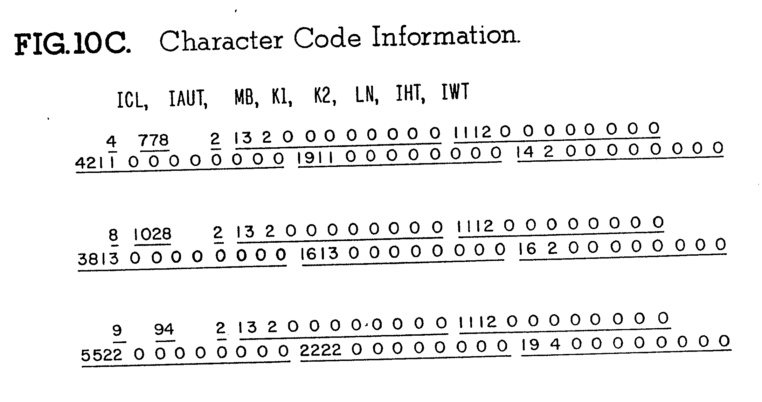

2. Description of the prior art
    Prior art systems for document processors for recognizing printed characters in various formats and handwritten characters, such as the courtesy amounts on checks, include systems making use of statistical techniques. One of the difficulties with such systems is that it is hard to adapt them to interpret representations of characters which were not included in the original statistical analysis. The present system overcomes this difficulty very handily by enabling desired changes to be made in the memory forming a look-up table. This makes it possible to alter the selectivity and the sensitivity of the system in ways not readily available to the prior art.
    A subspace technique has been implemented successfully for recognizing certain machine printed characters were the term "subspace" is applied because only a portion of the entire space that a character occupies is used to compare against prototype classes. It is natural that one would want to extend this technique to the recognition of other machine printed characters and to unconstrained handwritten characters considering the elegant simplicity of the technique. Unfortunately, the subspace technique has not proven to be adaptable to cope with the variables associated with some fonts of printed characters and with unconstrained handwritten characters for reasons set out below.
    First of all, the subspace technique depends heavily upon the use of particular characters which can be segmented, isolated, or boxed before feature extraction is undertaken. In addition, the characters must be formed with a constant pitch. These characterstics are not found in all printed characters and in most cases, do not occur in unconstrained handwritten check amounts. Their lack presents key problems, and in fact, they are a major cause of failure of attempts to apply the subspace technique to handwritten characters and some printed characters.
    The subspace technique depends generally upon partitioning each character in a specific way such as into 3×3 or 5×5 equally divided cells. The average gray scale in each cell serves as a feature, requiring a 9 feature vector for 9 cells and a 25 feature vector for 25 cells. The distribution of the feature vectors in each class of characters (such as the character 3) is modelled by its auto-correlation, a second order model which corresponds to the mean and standard deviation in the case of one random variable. This modelling has been adequate for some machine printed characters, since for position of the character stroke does not change very much from one character font to another. Figure 2A shows some samples of unconstrained handwritten characters of class 3 (where each digit 0—9 is denoted as a class) against a background of 25 cells. In these examples, the stroke is seen to migrate drastically from one region to another of the 5×5 cells, demonstrating the inadequacy of auto-correlation modelling of the distribution of the feature vectors of an unconstrained character class.
    The geometric technique employed in the present invention avoids problems associated with the subspace technique, since it does not require segmentation prior to feature extraction. Character structures can be altered with ease for data representing noise codes (i.e. codes which are not recognized as character codes) and undesired structures can be removed with ease from such data to provide representations of a known character code. Confusion between classes (such as between classes 4, 8 and 9 in Fig. 10A) can be resolved by using special test features to highlight their differences, using features extracted from the original resolution of the character image.
    Character recognition systems using geometric technique are disclosed in the IEEE Transactions on Systems, Man, and Cybernetics, vol. 4, No. 6, entitled "Fuzzy logic for handwritten numeral character recognition" and in The Marcony Review, vol. 32, No. 172, 1969, entitled "A feature detection method for optical character recognition". Those systems include, means for extracting certain data representing features and branch classification from said signals and producing character codes representing the characters, means for comparing the data representing the resulting unknown character codes with data representing known character codes. If, as a result of a comparison, a positive identification is made, the processor provides output signals designating the identified character; if no identification is made, the system transmits the data representing the features of the unknown character for further processing as unidentified data.

Brief summary of the invention
    A character recognition system for processing data in the form of signals representing geometric features of characters, including skeleton characteristics, comprising:

means for extracting a character code in the form of data representing selected features of a character from said signals;

means for comparing said character code with data representing character codes of known characters so that output signals designating the identified character are provided when positive identification is made;

means for transmitting said character code for further processing when positive identification is not made, and a confused code processor for applying fine feature tests to distinguish between different characters having identical character codes to establish positive identification of a character;

said confused code processor providing an output signal designating said identified character, characterised in that

said fine features include stroke width characteristics and in that said system includes a noise processor coupled responsive to receipt of said character code to make, when positive identification is not made, an analysis thereof and to produce an altered character code incorporating information generated from said analysis, and

means for routing said altered character code to said means for comparing in search of positive identification.

In the foregoing, in the interest of simplicity, processing is indicated as taking place in a serial fashion. Because of the speed with which data is produced in an embodiment envolving the reading of many documents per record, processing in a preferred embodiment will actually be performed in a parallel look-ahead mode.

Brief description of the drawings

Fig. 1 is a block diagram showing a system to which the invention relates for processing characters such as printed alpha-numeric characters and unconstrained handwritten characters;

Fig. 2A shows samples of four unconstrained handwritten characters "3" which share the same character code $D(1,2) \cdot D(2,3)$, even though they differ greatly in appearance from each other;

Fig. 2B is a representation of a handwritten "9" showing how the structure of a node set $(N1, N2)$ may be combined with that of a branch set $(B1, B2)$ to define a character $(B1, B2) \cdot (N1, N2)$;

Figs. 3A and 3B illustrate examples of fine features relating to corners and cavities which may be analyzed to enable the resolution of confusion between confused codes;

Figs. 3C, 3D and 3E represent an end point, a branch point and a junction point as examples of three points important to the description of the character structure;

Figs. 4A, 4B and 4C illustrate the index of modulation (DM) as it relates to (A) a curve and a line, (B) a point, or a line of zero length, and a loop and (C) two straight lines;

Fig. 5 is a flow chart illustrating how gross, or topological, classification is accomplished to establish whether particular received data contains information relating to a line, a curve or a loop;

Fig. 6A is a chart showing classification used for various pictorial representations;

Fig. 6B is a chart showing a group of D shaped curves;

Fig. 7 shows the preferred direction taken in counting the branch points of an ideal C curve;

Fig. 8 is a diagram illustrating the basis of loop branch classification;

Fig. 9 is a table of typical characters showing character codes for the digits forming classes "0" through "9";

Fig. 10A shows the relationship of Figs. 10A-1 and 10A-2;

Fig. 10A-1 shows two different characters: "4", "8" and Fig. 10A-2 shows a third character "9" which, when analyzed in accordance with the present system, are represented by an identical character code i.e. $V(1, 2) \cdot OA(1, 1)$;

Figs. 10B, 10B-1 and 10B-2 show examples of coded information relating to the skeletons of the "4", "8" and "9" in Figs. 10A, 10A-1 and 10A-2;

Fig. 10C is an example of character code information for the "4", "8" and "9" of Fig. 10A;

Fig. 11 illustrates characteristics of individual writing styles for handwritten characters in the form of extra loops and branches;

Fig. 12 illustrates some effects which result from operating at a poorly selected, or improper, threshold level;

Fig. 13 illustrates some of the effects of improper smoothing;

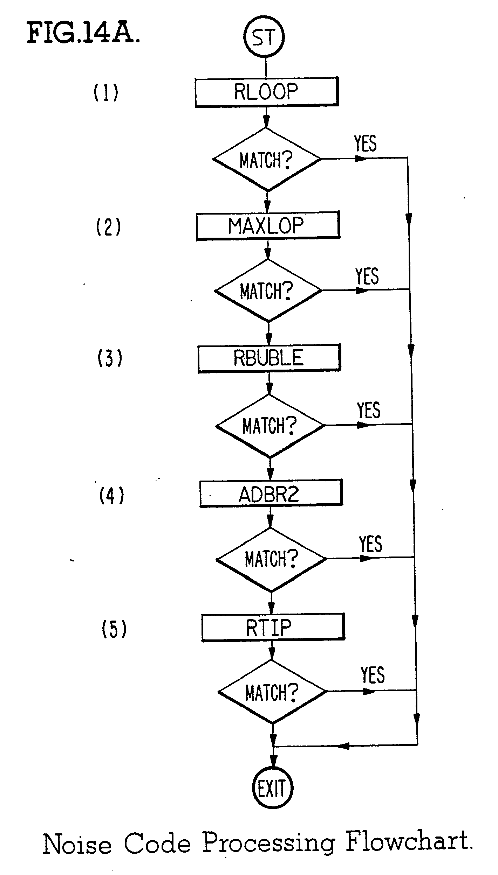

Fig. 14A shows a noise code processing flow chart according to the invention;

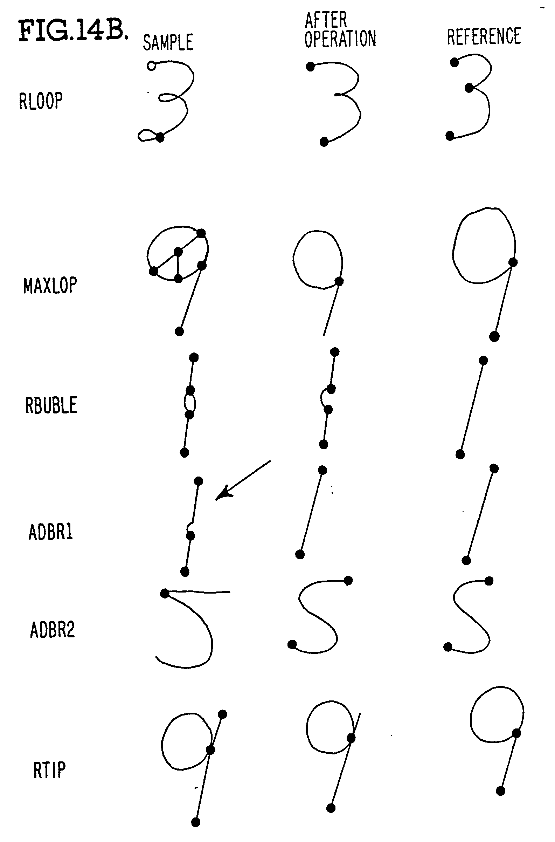

Fig. 14B is a table illustrating sample characters before and after operations in accordance with the flow chart in Fig. 14A;

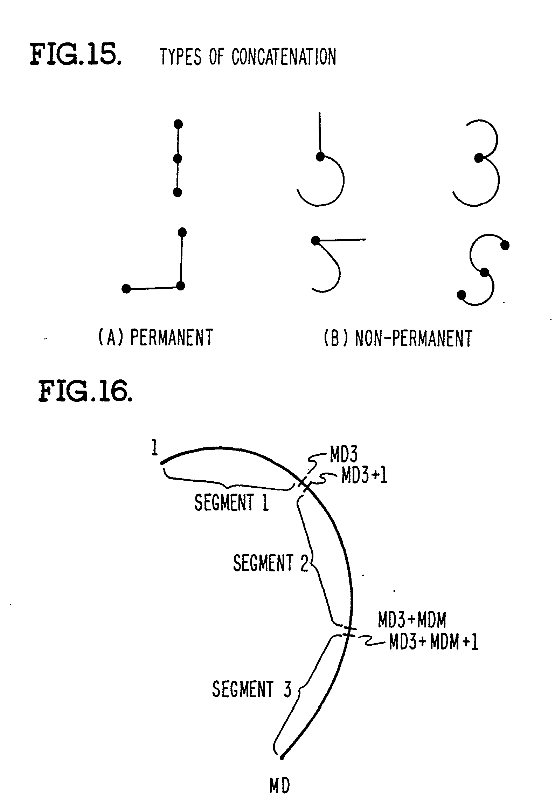

Fig. 15A illustrates examples of permanent concatenation and Fig. 15B illustrates examples of non-permanent concatenation;

Fig. 16 illustrates an exemplary "class D" curve which has been chosen to represent the segmentation of characters according to the invention.

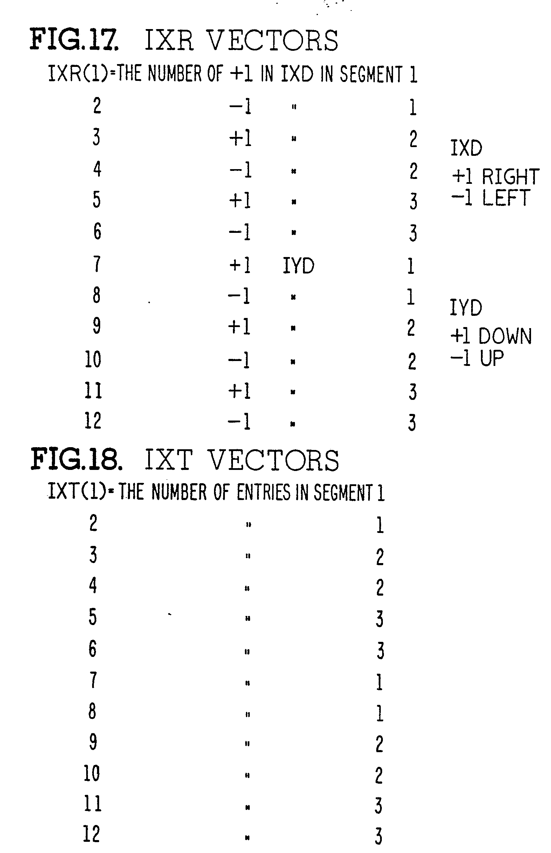

Fig. 17 shows a counting vector IXR which relates to the count of the number of right, left, up and down movements in each segment;

Fig. 18 shows a counting vector IXT which involves a count of the number of entries in each segment;

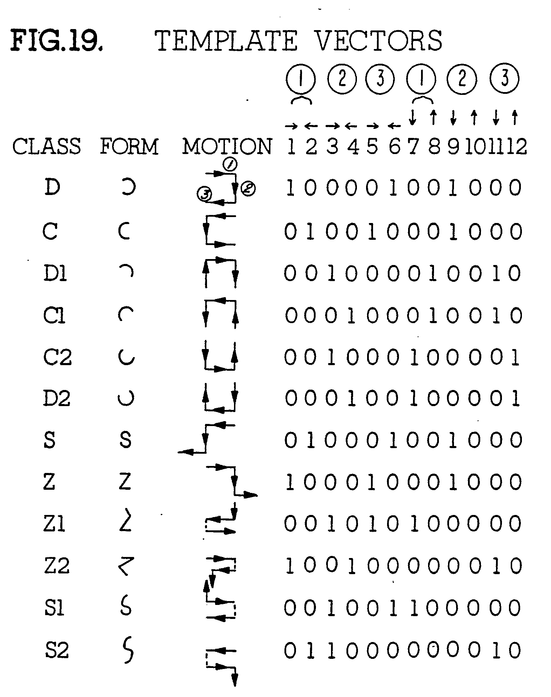

Fig. 19 shows examples of template vectors;

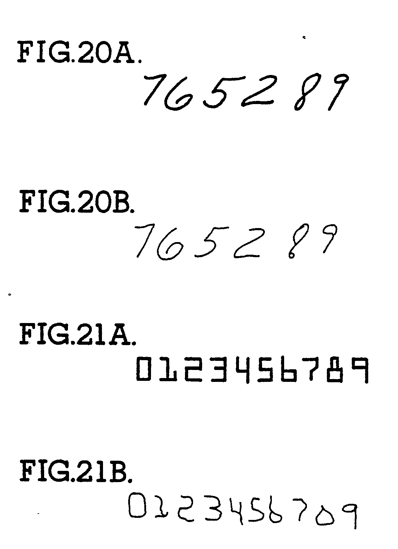

Fig. 20A shows a series of handwritten characters to be processed as they appeared on a document to be read;

Fig. 20B shows skeletons of the character of 20A as they appeared on a cathode ray tube after the characters were thinned in the stroke width analyzer;

Fig. 21A shows a series of printed characters as they appeared on a documsnt to be read; and

Fig. 21B depicts the skeleton of the character of Fig. 21A as they appeared in a CRT after processing.

Description of a preferred embodiment

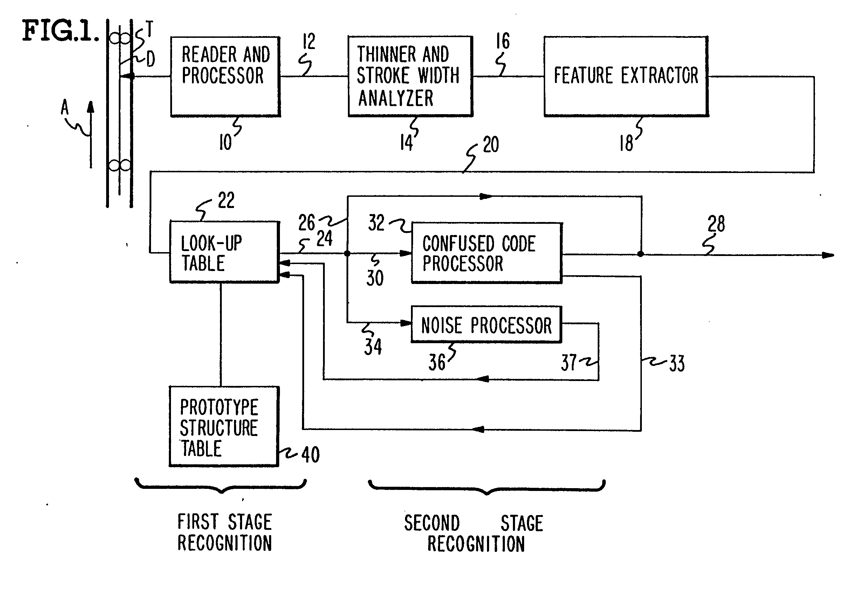

Turn now to the block diagram of Fig. 1 for an overall showing of a system to which the present invention relates. According to this system, image data is applied over bus 12 from a reading and preliminary processing apparatus indicated at 10. This image data is derived from scanning documents, such as a document at D, as they move by in a document transport track T in the direction of an arrow A. An exemplary document transport system is shown in U.S. Patent 4 331 328, issued 25 May 1982, entitled "Controller for a Servo Driven Document Feeder", filed June 30, 1980 in the name of Harold A. Fasig, which has been assigned to the same assignee as the present invention and is hereby incorporated by reference.

The image data over bus 12 is analyzed by a Thinner and Stroke Width Analyzer at 14 which provides data in the form of digital signals representing the bare skeleton of each character together with digital signals representing stroke widths. The data from the analyzer at 14 is supplied over bus 16 to a Feature Extractor or Branch Classifier at 18 which extracts gross features, or topological features, and produces character codes, or structure codes, including information as to topological features for each character detected by the reader and processor. We can define a character code, or structure code, as the concatenation (or linkage in series)·of all the related branch features of a character and their related nodes. The feature extractor 18 in a preferred case may be implemented by the use of a computer such as a Burroughs B1900 or a larger computer, although hard logic or TTL Proms may be used, to extract topological features such as the number of branches, number of loops, types of branches, and the like and provide other operations necessary to generate character codes.

The character codes are supplied over bus 20 to a look-up table 22 which provides a comparison with data in the Prototype Structure Table (or template) 40 and classifies the received information according to whether there is (1) a direct match of the received character code with the data (or template) in the Prototype Table, (2) a "confused class' or (3) a "noise code". Descriptions relating to a (1) direct match of data, (2) a confused code or class and (3) a noise code are given below. The look-up table 22 may be formed preferably by TTL hardwire logic. The Prototype Structure Table 40 is preferably formed by a TTL Prom. The Feature Extractor 18 is formed in a preferred case using TTL hardwire logic.

If there is a (1) direct match, then signals designating the identified character are transmitted over bus 24 and bus 26 directly to a bus at 28 for use as a direct read-out of the identified character. This information may be supplied to utilization apparatus which may include a microprocessor and a printer.

If the look-up table indicates that the character code represents more than one character or class of data, rather than a single character or class of data, a condition is indicated which may be labeled (2), a confused code or confused class. A procedure involving special test features is required to resolve the confusion. Suitable test features are provided by apparatus identified as the Confused Code Processor 32 which receives confused code signals over bus 30 from the look-up table 22 and bus 24. Processor 32 provides identification signals over bus 28. In case identification is not completed, it routes the identified data bus 33 to the look-up table. The Confused Code Processor will preferably be formed using a microprocessor such as an Intel 8035.

If the character code from 18 is not in the code table of 22, meaning that it cannot be identified as belonging to either (1) or (2) above, we call it a noise code corresponding to class (3) above. In that case it is routed via buses 24 and 34 to the Noise Processor 36 for processing and then over bus 37 for comparison in the look-up table. The Noise Processor will preferably be formed using a microprocessor such as an Intel 8035.

An aspect of the present invention which is illustrated in Fig. 1 is the ease with which character prototypes may be added or deleted. Block 40 is a source of prototype structure information in the form of a table which may be altered by additions or deletions as needed for access over a bus 38 from the look-up table at 22. This demonstrates how the Prototype Structure Table may be modified by the simple addition of instructions to a TTL Prom, or other memory device or the subtraction of instructions from such a memory device.

The Reader and Processor 10 and the Thinner and Stroke Width Analyzer 14 are disclosed in detail in other applications which are referenced herein as a source of signals to be employed in the practice of this invention. Examples of a Reader and Processor are shown in a copending United States patent application number 35,993 (now abandoned) filed in the names of Pepe Siy, Robert Bloss and Gary B. Copenhaver, on May 4, 1979 entitled "Adaptive OCR Front-end System" which is assigned to the same assignee as the present application. Another example of a Reader and Processor is to be found in U.S. Patent 4 491 961, issued 1, January 1985 entitled "Pixel Correction Logic Circuit" filed in the names of Jimmies Neill and David Sutton. An example of a Thinner and Stroke Width Analyzer in combination with Feature Extraction is shown in United States patent number 4,162,482 entitled "Preprocessing and Feature Extraction System for Character Recognition" which issued July 24, 1979 in the name of Chauchang Su and was assigned to the same assignee as the present application. The foregoing applications and patents are hereby incorporated by reference.

In the interest of providing a better basis for the further discussion of the invention, a brief description of a Thinner and Stroke Width Analyzer is presented. The algorithm employed with the Thinner and Stroke Width Analyzer 14 erodes the boundary of the character layer by layer by removing points in the existing boundary whose removal does not destroy connectivity. This procedure is applied sequentially until no more points can be removed. The remaining points form the skeleton of the character which, together with the stroke width information retained by 14, completely describes the character. The assertion that the skeleton and stroke width completely describe the character is borne out by the fact that the original character can be reconstructed to a close approximation by drawing a circular disc on each skeleton point with a diameter equal to the stroke width at that point. The new skeleton representation puts forward the basic structure of the character which may be used, in a case (1) example, in direct identification of the character. Use of the skeleton may be made also to facilitate the extraction of geometric features and the further analysis needed to resolve confusion in cases (2) and (3) above.

As indicated above, it is known that the skeleton and its associated stroke width completely define the original shape of any line-like object. The present invention makes use of this fact in a character recognition system and has the following characteristics:

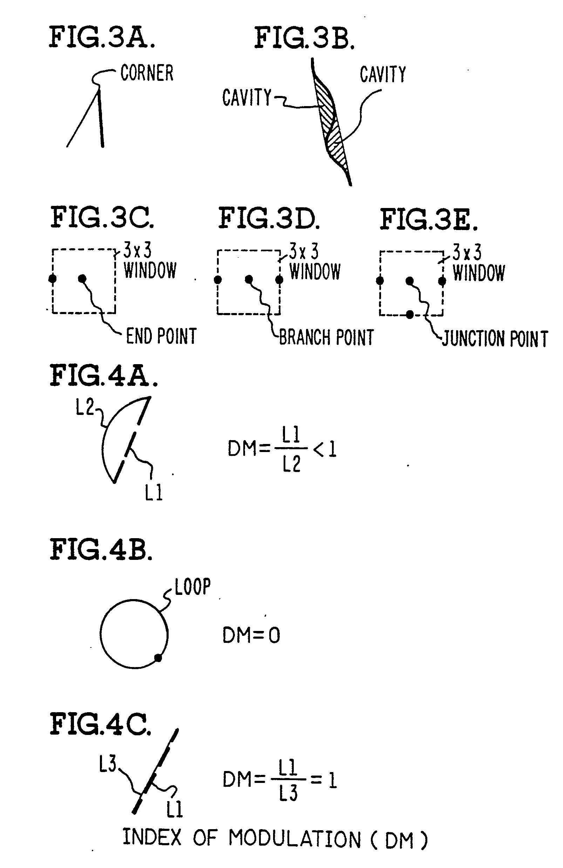

1. Does not require segmentation of characters prior to feature extraction.
2. Enables character prototype representation to be added or deleted easily.
3. Enables first level recognition and extraction of gross topological and geometric features to be done easily, where the features include:
   a. Number of Branches
   b. Number of Loops
   c. Types of Branches
   d. Connectivity of Branches
4. Enables ready extraction of fine features for use in the resolution of confusion up to the level of the original resolution, including:
   a. Stroke width at a given skeleton point.
   b. Stroke width within a branch or between branches.
   c. Shape features such as corners and cavities where corners are formed at the juncture of straight lines, as shown in Fig. 3A, and cavities occur on the concave sides of curves, as shown in Fig. 3B.

The skeleton representation facilitates the description of the character structure. There are 3 types of points in the skeleton representative of the character: (1) end points or points with one neighbour; (2) branch points or points with exactly two neighbours and (3) junction points, or points with three or more neighbours. Attention is directed to Fig. 3C, 3D and 3E for a representation, respectively, of an end point, a branch point and a junction point. Each of these "points" is determined by looking at the skeleton points associated with a point centered in a three-point-by-three point window. If the central point has only one neighbour (Fig. 3C), then the central point is an end point. If the central point has two neighbours (Fig. 3D), then it is a branch point. If the central point has three or more neighbours (Fig. 3E), then it is a junction point. The end points and junction points may be referred to as critical points which may also be called node points.

The critical points, or node points, are numbered in a particular sequence in the practice of this invention. It is recognized, of course, that the nodes could be numbered in various arbitrary ways, but for purposes of this invention there is only one preferred way. That way consists with vertical features of always designating the first critical point, or node, as the top and the second critical point as the bottom. With horizontal features, the first node is always the left node and the second is always the right node. The convention can thus be summarized by saying the first critical point is at the top or left and the second critical point is at the bottom or right with clustered nodes or connected nodes given the same label. The application of this convention is illustrated in Fig. 9.

In keeping with the foregoing, a collection of end points and/or junction points defines a node set, which may be called node 1, node 2 etc. A list of consecutive branch points starting from a node 1 and ending in a node 2, where node 1 can be identical to node 2, defines a branch. A branch, therefore, may be said to be formed by a sequence of branch points starting from one critical point (node) and ending at another (or the same) critical point (node). A collection of branches defines a branch set. A node set and/or a branch set may be used to define the structure of a character. In Figure 2B, by way of example, (N1, N2) defines a node set, (B1, B2) defines a branch set and (N1, N2) (B1, B2) defines the structure of the character "9". The character "1", as shown in Fig. 9, may be defined by a node set N1, N2.

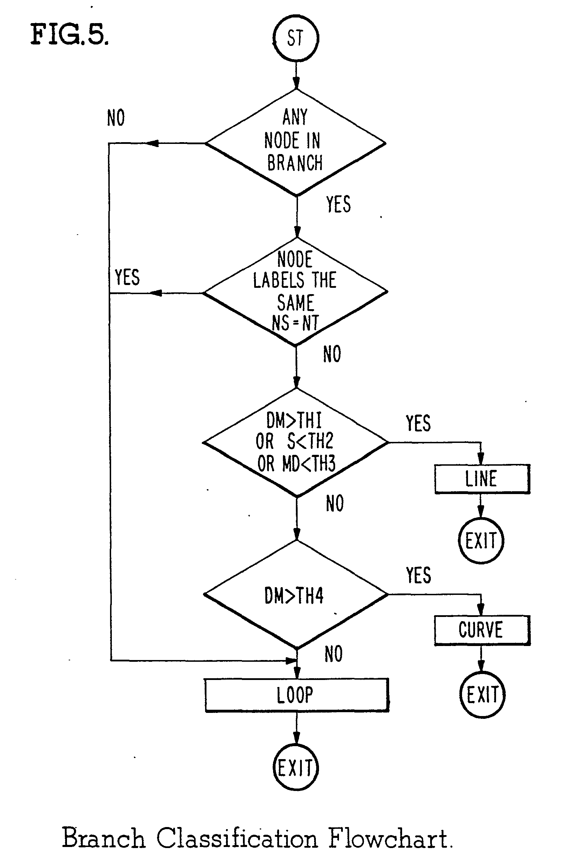

In character recognition, in accordance with the practice employed with the present invention, each branch is classified by the Feature Extractor 18 in a gross, or rough topological fashion, to establish conformation to one of the following classes: line, curve, or loop. Three measurements are used to establish this claissification. They are index of modulation (DM), least square error(s), and branch length (MD). The index of modulation may be defined as the ratio of the length of the straight line joining the two nodes of a branch to the length of the branch joining the two nodes. By this definition the index of modulation of a straight line is 1, of a closed loop is 0, and of a curve is between 0 and 1. Figs. 4A, 4B and 4C illustrate the index of modulation (DM) as the relationships of a straight line L1 to a curve L2, a line of zero length to a loop and a line L1 to a line L3. Figure 5 is a flow chart illustrating how this gross classification is accomplished working with data in the form of digital representations of DM, S and MD.

The parameters in Fig. 5 are defined as follows:

NS—The starting node label
NT—The ending node label
DM—Index of modulation
S—Least square error
MD—Branch length
TH1...TH4—Threshold values

The branches may be classified further into the following sets or features where it will be recognized that additional and/or other sets or features may be used and still be within the scope of the invention:

LINE=(H, V)
CURVE=(C, D, S, Z)
LOOP=(OA,OB,O)

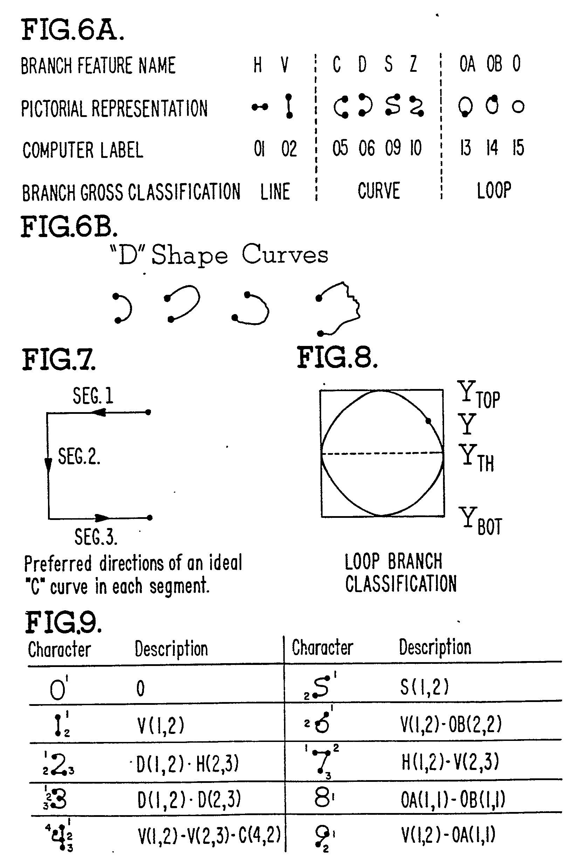

Examples of these are illustrated in Fig. 6A. The character structure, i.e. the connectivity of the character branches through their nodes, becomes explicit in the skeleton representation. For the purpose of comparing structures in the first level recognition, a character code is defined. To generate the code each branch is assigned to one of the sets or features illustrated in Fig. 6A.

The features of Fig. 6A were selected to represent the numerical character classes. Each of the features defines an equivalent class of allowable distortion in a branch. For example, the branches shown in Fig. 6B should all be classified as D shaped curves as shown in column D opposite "Pictorial Representation" in Fig. 6A. It will be recognized that the characters of interest could include characters of many other types than just the numerals illustrated, such as the characters represented in the ASCII code.

Membership grade of line features

A membership grade or "degree of belongingness" may be defined for each feature of line, curve or loop. The membership grade of a line feature is determined by its slope angle. To this end a threshold angle $\theta_T$ is selected which establishes a boundary between the horizontal and vertical lines where $\theta$ is the angle of the line relative to the horizontal. The membership grades for a line may then be defined as:

$$fV=\frac{|\theta|-|\theta_T|}{90-|\theta_T|}: |\theta|\geq|\theta_T| \text{ Vertical line}$$

$$=0; \text{ otherwise}$$

$$fH=\frac{|\theta_T|-|\theta|}{|\theta_T|}: |\theta|\leq|\theta_T| \text{ Horizontal line}$$

$$=0; \text{ otherwise}$$

Membership grade of curve features

The membership grade of one of the curve features (C, D, S, Z) is determined by partitioning the curve branch into 3 equal segments where, for each curve feature, a preferred direction is defined on each segment. The membership grade of a curve feature is obtained then by counting the number of branch points that satisfy the preferred direction, normalized to the number of points in each segment. Figure 7 shows the preferred direction for an idealized C curve.

A more detailed analysis of curve features will be apparent from a discussion of Figs. 16, 17, 18 and 19. Fig. 16 illustrates an exemplary D curve which has been chosen at random to illustrate the method of segmentation used. The segments are about equally divided as defined by indices (illustrated in Fig. 16) as follows:

Segment 1: 1 to MD3
Segment 2: (MD3+1) to (MD3+MDM)
Segment 3: (MD3+MDM+1) to (MD−1)

where MD3=(MD−1)/3; MDM=(MD−1)−2MD3; and MD is the length of the branch. Two vectors IXD and IYD are defined as:

IXD (I)=IX(I+1)−IX(I)
IYD(I)=IY(I+1)−IY(I); I=1, 2..., MD−1,

where IX and IY represent the X and Y branch coordinate lists. The +1 and −1 entries in IXD mean right and left movement across the branch, respectively. The +1 and −1 entries in IYD mean down and up movement across the branch, respectively.

EP 0 079 251 B1

Two counting vectors IXR and IXT are employed in the system. Vector IXR involves a count of the number of right, left, up, and down movements in each segment. Vector IXT involves a count of the number of entries in each segment. Each feature template is defined by a vector with a nonzero entry in the preferred direction in each segment. Figures 17 and 18 show the counting vectors IXR, IXT and Figure 19 shows examples of template vectors. As an example, consider the D template in the first row of Fig. 19 which has nonzero entries in indices 1, 9, and 6 corresponding to preferred motion of right, down, and left in segment 1, 2, and 3 respectively. The correlation between the preferred motion of the branch given by IXR and the preferred motion of each feature defined by its template X is given by Rx, as follows:

$$Rx = \sum_{J=1}^{12} [IXR(j)X(J)/IXT(J)]/ \sum_{J=1}^{12} X(J)$$

The branch is assigned to the feature associated with X that maximizes Rx, where X=D, C...from the template.

Membership grade of loop features

The membership grade of a loop feature is determined by the relative position of the node with respect to the top, Y top, and the bottom, Y bot boundary of the branch. The position threshold Yth is selected between Y top and Y bot, see Figure 8. The membership grades are:

$$f_{OA} = \frac{Y - Y_{TH}}{Y_{th} - Y_{top}} : Y \geq Y_{TH}$$

$$= 0; \text{ otherwise}$$

$$f_{OB} = \frac{Y_{TH} - Y}{Y_{BOT} - Y_{TH}} : Y \leq Y_{TH}$$

$$= 0; \text{ otherwise}$$

Branch features and character codes

The branch features are used to describe the structure of the characters. Two branches are said to be related if they have a common node. A character code (structure code) is the concatenation, or linkage in a series, of all the related branch features and their corresponding node pairs. Figure 9 shows typical character codes for the numerical characters. The character codes define equivalent classes of characters in a manner to include allowable distortions. New character codes may easily be added as new structures are found in the future and archived or deleted as their occurrence diminishes in frequency. A table of allowable character codes is generated and stored in the look-up table at 22. The codes stored in the table are unique representations of the character codes. First level character recognition is achieved by simple table lookup, that is structure matching. The result of matching can be represented as one of three cases, previously identified as Case (1) a direct match, Case (2) a confused class or code, and Case (3) a noise code. In Case (1), the character code represents a unique class and recognition is complete. In case (2), the character code represents several classes which may be called a confused code and special test features are employed to resolve the confusion. In case (3), the character code is not in the code table and the code may be called a noise code. When a case (1) character code is found, identification is complete. When a confused code or a noise code is discovered, additional processing is required.

Branch representation

Each branch is represented by coding the x, y coordinate of each consecutive branch point connecting a pair of nodes. The x, y coordinate lists are packed together into one x, y coordinate list array. The array is then delimited by a pointer array which contains an expression denoting the length of each branch. Figures 10B-1 and 10B-2 show the skeleton representation of the 3 characters shown in Figures 10A-1 and 10A-2. The following information is stored in a test example, although, of course, ICL and IAUT would normally not be available at this stage from processing an unknown character code:

ICL, IAUT, MB, K1, K2, IL, LB, 1X, 1Y where
ICL: the class code.
IAUT: the author's code.
MB: the number of branches.
K1: the 10 element array, not used.
K2: the 10 element array, containing the label of each node pair.
IL: one more than the number of branches.
LB: the 10 elements array, containing the length of each branch.
1X, 1Y: the 100 elements arrays, containing the x, y coordinate respectively of each branch point.

7

EP 0 079 251 B1

The first record in Figures 10B-1 and 10B-2 contains the following information:

1. ICL=4; The character is 4.
2. IAUT=778; written by author 778.
3. MB=2; The character has 2 branches.
4. K1=Empty array.
5. K2(1)=11, K2(2)=12; the first, and second branches are connected to node pair (1, 1), and (1, 2) respectively.
6. IL=3.
7. LB(2)=42, LB(3)=11; the first, and second branches are of length 42, and 11 respectively;
8. There are two branches:

   branch 1=((IX(1), IY(1)), ((IX(2), IY(2)),..., (IX(42), IY(42))
        =((19, 24), (18, 24),..., (20, 24))
   branch 2=((IX(43), IY(43)), (IX(44)),..., (IX(53),IY(53))
        =((20, 25), (20, 26)..., (21, 35))

The computer coding of the character codes for 4, 8 and 9 are shown in Figure 10C with the associated size information and the ICL and IAUT shown available in a test sample, though they would not normally be known from an unknown character code:

ICL, IAUT, MB, K1, K2, LN, IHT, IWT where
ICL: the class code.
IAUT: the author's code.
MB: the number of branches.
K1: the 10 element array, containing the code of each branch.
K2: the 10 element array, containing the label of each node pair corresponding to each branch.
LN: the 10 element array, containing the length of each branch.
IHT: the 10 element array, containing the height of each branch.
IWT: the 10 element array, containing the width of each branch.

The first record in Figure 10C contains the following information:

1. ICL=4; the character is 4.
2. IAUT=778; written by authour 778.
3. MB=2; the character has 2 branches.
4. K1(1)=13, K1(2)=2; the first, and second branches are coded as 13, and 2 respectively.
5. K2(1)=11, K2(2)=12; the first, and second branches are connected to node pair (1, 1) and (1, 2) respectively.
6. LN(1)=42, LN(2)=11; the first, and second branches are of length 42 and 11 respectively.
7. IHT(1)=19, IHT(2)=11; the first and second branches are of height 19, and 11 respectively.
8. IWT(1)=14, IWT(2)=2; the first, and second branches are of width 14, and 2 respectively.

Resolution of a confused code (case 2)

Figures 10A-1 and 10A-2 show three different characters 4, 8, 9 which, when analyzed in accordance with the present system, yield an identical character code, i.e. $V(12) \cdot 0A(11)$, a case (2) situation involving a confused code or class. Special tests, involving fine features, are used by the Confused Code Processor indicated at 32 (Fig. 1) to resolve the confusion presented by this situation. As an example, the following features are used to resolve the confusion involved in distinguishing between the 4, 8 and 9:

1. The stroke width ratio, STR. The ratio between the average stroke width of branch B to the average stroke width of branch OA. This feature is small for 4 and 9 but large for 8.

2. The branch width ratio, WTR. The ratio between the branch width of branch OA plus its average stroke width to the average stroke width of branch V. This feature is large for 4 and 9 but small for 8.

3. The acuteness ratio, TR. The ratio of the average of the top fifth portion of the left-right contour of branch OA to the maximum value of the left-right contour of branch OA. This feature is small for 4 but large for 8 and 9.

4. The relative position, PM, of the maximum left-right contour of branch OA. The position is near the bottom of the branch for 4 and somewhere in the middle for 8 and 9.

Classifications for 4, 8, and 9 using the special test features described are given below:

| Classification for | SYNTACTIC | SEMANTIC |
|---|---|---|
| Character 4=V(12) · OA(1) | | $STR \leq TH41 \wedge TR \leq TH42 \wedge PM \geq TH4$ |
| Character 8=V(12) · OA(11) | | $STR > TH81 \wedge WTR \leq TH82$ |
| Character 9=V(12) · OA(11) | | $STR \leq TH91 \wedge Tr > TH92 \wedge PM < TH93$ |

The semantic part of the classification defines a piecewise linear region whose boundaries are defined by the thresholds. If the features are properly designed this region will be well separated. The threshold parameters will be very stable and the determination not very critical.

8

For each branch feature, there are only a finite number of characteristics that one can extract. Some typical features are length, average stroke width, stroke width standard deviation, aspect ratio, 5 directional chain code (where a branch is subdivided into five segments instead of three in order to increase the resolution), 5 average stroke width, acuteness or pointedness of a loop branch, etc. These special test (fine) features can be precomputed so that, once a confused case (2) is encountered, the features are available to be used in the classification of each such confused class.

Resolution of a noise code (case 3)

A noise code, of case (3) above, is a code that is not the code table. There are two types of noise codes: type (a) a noise code with a valid structure that was not included in the original code table and can be added later, type (b) a noise code that does not have a valid structure which would require noise processing to bring its structure to a valid one.

The study of noise problems in unconstrained handwritten character recognition reveals that noise of type (b), above, is primarily caused either by individual writing style or by pre-processing. Individual style refers to the way a person writes which results in such things as added loops and extended branches as indicated at "a" in Figure 11. Pre-processing problems arise due either to an improper choice of threshold (Fig. 12) or to improper smoothing (Fig. 13).

Noise problems resulting from an improper choice of threshold level (Fig. 12) can cause: (a) a pin hole in a character stroke, resulting in a small bubble after the erosion or skeletonization process has been applied; (b) unwanted branches due to branch bridging or partial filling of loops creating multiple branches inside a loop; (c) removal of a necessary branch due to uneven gray level intensities along the strokes of a character. Figure 12 shows some effects of improper thresholding. Improper smoothing, on the other hand, can produce rugged edges which appear as undesirable extraneous short branches, as indicated in Figure 13.

A noise code processing flow chart is shown in Figure 14: The algorithm is described in the following:

1. RLOOP—This processor removes all the loops that are considered small relative to the character size. The remaining structure is matched with the structures in the look-up code table. If a match is found, the algorithm terminates, otherwise go to MAXLOP.

2. MAXLOP—This processor removes all the branches inside a loop. The remaining structure is matched with the structures in the code table. If a match is found the algorithm terminates, otherwise go to RBUBLE.

3. RBUBLE—This processor removes all the bubbles that are considered small relative to the character size. The remaining structure is matched with the structures in the code table. If a match is found, the algorithm terminates, otherwise go to ADBR2.

4. ADBR2—This processor examines each node with exactly two branches attached to it. These two branches are candidates for concatenation. There are two kinds of concatenation: permanent, and non-permanent. A permanent concentration means that once two branches are concatenated they stay concatenated in the subsequent processing. A non-permanent concatenation means that after concatenation and structure check to continue subsequent operation the two branches are de-concatenated. Depending on the total branch length and branch type, the order of processing is performed as follows:

a) Two line branches in the increasing order of total branch length are concatenated. This is a permanent concatenation, as shown with the "1" in Fig. 14B and in Fig. 15A.

b) A line and a curve branch in the increasing order of total branch length are concatenated, this is a non-permanent concatenation, as shown with the "5" in Fig. 14B and in Fig. 15B.

c) Two curve branches in the increasing order of the total branch length are concatenated, this is a non-permanent concatenation, as indicated in Fig. 15B. Figure 15B shows the two types of non-permanent concatenation. The process tries to find concatenation in the order of processing that yields a match in the code table. If two or more concatenations are found this is a reject and the algorithm terminates, if one or non are found go to RTIP.

5. RTIP—This processor deletes branches, which is a destructive operation. If not done with sufficient care, it may destroy the structure of the character. In practice, one has to limit the length of the branch that can be deleted to no more than 40% of the original character structure. There are three types of branches that can be deleted without destroying connectivity: (a) tip branches such as "a" in Fig. 11B, (b) big loop branches such as "a" in Fig. 11A, and (c) big bubble branches. The order of processing is from increasing order of branch length. After deleting a branch, the remaining structure is checked for a match. If a match is not found, the affected node is checked to determine whether only two branches are attached to it; if so, concatenation is applied and the resulting structure is again checked for a match. This process is continued until two structure matches are found, including the one in ADBR2. If two structures are found, the confidence levels i.e. the ratios of the remaining branch length to the original branch length of each of the structures, are compared. The higher confidence level structure is selected if the lower confidence level is less than a certain amount.

Fig. 14B is a chart depicting relationships between operations in accordance with the algorithm referred to above, various samples of skeletons of "noisy" and unidentifiable characters, the same characters following operations and reference characters with which identification is to be made.

# EP 0 079 251 B1

Examples of characters and their skeletons

Figure 20A is a representation of a series of handwritten characters as they appeared on a document to be read. Figure 20B is a representation of the skeletons of the same characters as they appeared on a cathode ray tube after processing through reader and processor 10 and thinning in the thinner and stroke width analyzer 14. It was found that recognition of all but the "5" and the "8" could be made with 100% confidence in the result, using only the look-up table 22 and the associated prototype structure table 40. Confidence in the result of direct recognition for the "5" is about 83% and for the "8" is about 91%. Recognition of the "5" and "8" in this case would approach 100% with additional processing in the noise processor 36.

Figure 21A is a representation of printed characters as they appeared on a document to be read. Figure 21B is a representation of the skeletons of the same characters after processing through the reader and processor 10 and after thinning in the thinner and stroke width analyzer 14. In this example, as in other examples employing other printer character fonts, it was found that confidence in the result for nearly every character is 100%.

Summary

A technique is disclosed to enable recognition of unconstrained handwritten charcters and also of printed characters in various formats. Each character is first described in terms of its skeleton and the associated stroke width information of each point in the skeleton. The skeleton is used to extract the structure of the character (synctatic information) represented by the character code, and the stroke width information is used to extract special test features (semantic information) represented by the discriminant function.

Class classifiers are used consisting of a collection of known character codes for a given class and their associated discriminant functions. In general terms, the classifier for class "x" is represented by:

$$\text{classifier of class ``x''} = \begin{bmatrix} \text{CHARACTER CODE} & 1: & \text{DISCRIMINANT FUNCTION} & 1 \\ '' & 2: & '' & 2 \\ '' & & '' & \\ '' & N: & '' & N \end{bmatrix}$$

where N is the number of prototypes or styles in class "x". The discriminant function is empty when the character code is unique, that is, when the structure of the character uniquely defines the character class. The classifier representation provides an easy means of adding or subtracting character codes and their associated discriminant functions. An incoming unknown character is assigned to the class that contains the character code that best matches the character code of the unknown character and its associated discriminant function which yields the best response.

The skeleton and stroke width information representation of any character is complete in the sense that the original character can be reconstructed from them. The representation provides us with a means of readily extracting gross geometrical or topological features such as the number of branches, number of loops, types of branches and their connectivity. The representation also provides us with a means of extracting finer features by such techniques as comparing regional stroke width within a branch or between branches, and local shape features. The ability to extract the needed information from gross to fine features about a character is one of the unique characteristics of the disclosed geometric recognition technique.

## Claims

1. A character recognition system for processing data in the form of signals representing geometric features of characters, including skeleton characteristics, comprising:

means (10, 16, 18) for extracting a character code in the form of data representing selected features of a character from said signals;

means (22) for comparing said character code with data representing character codes of known characters so that output signals designating the identified character are provided when positive identification is made;

means (30, 34) for transmitting said character code for further processing when positive identification is not made, and

a confused code processor (32) for applying fine feature tests to distinguish between different characters having identical character codes to establish positive identification of a character;

said confused code processor providing an output signal designating said identified character, characterised in that:

said fine features include stroke width characteristics and in that said system includes a noise processor (36) coupled responsive to receipt of said character code to make, when positive identification is

10

not made, an analysis thereof and to produce an altered character code incorporating information generated from said analysis, and

means (37) for routing said altered character code to said means (22) for comparing in search of positive identification.

2. The invention as claimed in Claim 1, in which the noise code processor comprises:

means to remove selected elements of said character code and generate said modified character code.

3. The invention as claimed in Claim 2, in which:

the noise code processor (36) examines each node of a character code to which exactly two branches are attached;

said processor concatenating the two branches, reducing them to a single branch, and routing the resulting modified character to the look-up table (22) for comparison and identification.

4. The invention as claimed in Claim 3, in which:

the noise code processor (36) terminates the search in the event that two concatenations are attempted without securing a match in the look-up table (22).

5. The invention as claimed in Claim 3, in which the noise code processor (36) includes means for deleting portions of branches without destroying connectivity, said branches including tip branches, big loop branches and big bubble branches.

**Patentansprüche**

1. Ein Zeichenerkennungsystem zur Verarbeitung von Daten in Form von Signalen, die geometrische Merkmale der Zeichen einschließlich der Skelett-Eigenschaften darstellen, mit:

Mitteln (10, 16, 18) zum Aussondern eines Zeichencodes in der Form von ausgewählte Merkmale eines Zeichens darstellenden Daten aus den Signalen;

Mitteln (22) zum Vergleichen des Zeichencodes mit Zeichencodes bekannter Zeichen darstellenden Daten, so daß das identifizierte Zeichen bezeichnende Ausgangssignale erzeugt werden, wenn eine positive Identifizierung erfolgt;

Mitteln (30, 34) zur Übertragung des Zeichencodes für die weitere Verarbeitung, wenn eine positive Identifizierung nicht erfolgt ist, und

ein durcheinanderlaufender Code-Prozessor (32) zur Anwendung von Feinmerkmaltests, um zwischen unterschiedlichen Zeichen mit identischen Zeichencodes zu unterscheiden, um eine positive Identifizierung eines Zeichens zu erzeugen;

wobei der durcheinanderlaufende Code-Prozessor ein das identifizierte Zeichen bezeichnende Ausgangssignal erzeugt, dadurch gekennzeichnet, daß;

die Feinmerkmale Strichbreiten-Eigenschaften enthalten und daß das System einen Rausch-Prozessor (36) enthält, der gekoppelt ist und auf den Empfang des Zeichencodes reagiert, um eine Analyse darüber zu machen, wenn eine positive Identifizierung nicht erfolgt, und um einen geänderten Zeichencode zu erzeugen, der eine von der Analyse erzeugte Information enthält, und

Mitteln (37) zur Übertragung des geänderten Zeichencodes zu den Mitteln (22) zum Vergleich bei der Suche nach einer positiven Identifizierung.

2. Die Erfindung nach Anspruch 1, bei welcher der Raush-Code-Prozessor aufweist:

Mittel zur Beseitigung ausgewählter Elemente des Zeichencodes und zur Erzeugung des modifizierten Zeichencodes.

3. Die Erfindung nach Anspruch 2, bei welcher:

der Rausch-Code-Prozessor (36) jeden Kreuzungspunkt eines Zeichencodes prüft, an dem genau zwei Zweige angesetzt sind;

wobei der Prozessor die beiden Zweige verknüpft, sie zu einem einzigen Zweig reduziert und das daraus resultierende modifizierte Zeichen zu einer Verweistabelle (22) zum Vergleich und zur Identifizierung überträgt.

4. Die Erfindung nach Anspruch 3, bei welcher:

der Rausch-Code-Prozessor (36) die Suche in dem Fall beendet, daß zwei Verknüpfungen vorgenommen wurden, ohne eine Übereinstimmung in der Verweistabelle (22) zu erhalten.

5. Die Erfindung nach Anspruch 3, bei welcher der Rausch-Code-Prozessor (36) Mittel zum Löschen von Abschnitten der Zweige ohne Zerstörung des Zusammenhangs aufweist, wobei die Zweige Spitzenzweige, große Schleifenzweige und große Blasenzweige enthalten.

**Revendications**

1. Système de reconnaissance de caractères pour traiter des données sous la forme de signaux représentant des caractéristiques géométriques de caractères comprenant des caractéristiques de squelette, système comprenant:

des moyens (10, 16, 18) pour extraire un code de caractère sous la forme de données représentant des caractéristiques choisies d'un caractère à partir des signaux,

des moyens (22) pour comparer le code de caractère avec les codes de caractère représentant les données pour les caractères connus de manière à fournir des signaux de sortie désignant les caractères identifiés lorsqu'il y a une identification positive,

des moyens (30, 34) pour transmettre le code de caractère pour le traitement ultérieur lorsqu'il n'y a pas d'identification positive et,

et un processeur de code de confusion (32) pour appliquer des tests de caractéristiques fines et distinctes entre les différents caractères ayant des codes de caractère identiques pour assurer une identification positive d'un caractère,

le processeur de code de confusion donnant un signal de sortie désignant le caractère identifié, caractérisé en ce que les caractéristiques fines contiennent les caractéristiques de largeur de trait et en ce que le système comporte un processeur de bruit (36) couplé pour recevoir le code de caractère à effectuer lorsqu'il n'y a pas d'identification positive ainsi qu'une analyse et donner un code de caractère modifié contenant l'information généré par l'analyse, et

un moyen (37) pour envoyer le code de caractère modifié vers le moyen (22) pour la comparaison dans la recherche de l'identification positive.

2. Système selon la revendication 1, caractérisé en ce que le processeur de code de bruit comprend un moyen pour supprimer les éléments choisis du code de caractère et générer le code de caractère modifié.

3. Système selon la revendication 2, caractérisé en ce que le processeur de code de bruit (36) examine chaque noeud d'un code de caractère auquel sont rattachées exactement deux branches, le processeur effectue la concaténation de deux branches, pour les réduire à une seule branche et envoie le caractère modifié ainsi obtenu dans le tableau de consultation (22) pour la comparaison et l'identification.

4. Système selon la revendication 3, caractérisé en ce que le processeur de code de bruit (36) termine la recherche dans le cas où l'on tente deux concaténations sans garantir une coïncidence avec le tableau de consultation (22).

5. Système selon la revendication 3, caractérisé en ce que le processeur de code de bruit (36) comprend des moyens pour supprimer les parties de branche sans détruite la connectivité, ces branches ayant des extrémités de branche, des branches en boucle de grandes dimensions et les branches avec des bulles de grandes dimensions.

FIG.1.

READER AND PROCESSOR — 10, 12

THINNER AND STROKE WIDTH ANALYZER — 14, 16

FEATURE EXTRACTOR — 18

LOOK-UP TABLE — 22

CONFUSED CODE PROCESSOR — 32

NOISE PROCESSOR — 36

PROTOTYPE STRUCTURE TABLE — 40

FIRST STAGE RECOGNITION

SECOND STAGE RECOGNITION

EP 0 079 251 B1

# FIG.2A. Samples of unconstrained character 3.
## Character code $D(1,2) \cdot D(2,3)$

# FIG.2B.

A character structure.

EP 0 079 251 B1

# FIG.3A.

CORNER

# FIG.3B.

CAVITY

CAVITY

# FIG.3C.

3x3
WINDOW

END POINT

# FIG.3D.

3x3
WINDOW

BRANCH POINT

# FIG.3E.

3x3
WINDOW

JUNCTION POINT

# FIG.4A.

L2

L1

$$DM = \frac{L1}{L2} < 1$$

# FIG.4B.

LOOP

$$DM = 0$$

# FIG.4C.

L3

L1

$$DM = \frac{L1}{L3} = 1$$

INDEX OF MODULATION (DM)

3

# FIG.5.

Branch Classification Flowchart.

4

# FIG.6A.

| BRANCH FEATURE NAME | H | V | | C | D | S | Z | | 0A | 0B | 0 |
|---|---|---|---|---|---|---|---|---|---|---|---|
| PICTORIAL REPRESENTATION | ⊷ | ❗ | | 𝒞 | ⊅ | 𝒮 | 𝟤 | | ◗ | ◑ | ○ |
| COMPUTER LABEL | 01 | 02 | | 05 | 06 | 09 | 10 | | 13 | 14 | 15 |
| BRANCH GROSS CLASSIFICATION | LINE | | | CURVE | | | | | LOOP | | |

# FIG.6B.

"D" Shape Curves

# FIG.7.

SEG.1
SEG.2.
SEG.3.

Preferred directions of an ideal "C" curve in each segment.

# FIG.8.

$Y_{TOP}$
$Y$
$Y_{TH}$
$Y_{BOT}$

LOOP BRANCH CLASSIFICATION

# FIG.9.

| Character | Description | Character | Description |
|---|---|---|---|
| O | 0 | $_2S$ | $S(1,2)$ |
| $1_2$ | $V(1,2)$ | $_2\delta$ | $V(1,2) - 0B(2,2)$ |
| $_2 2_3$ | $D(1,2) \cdot H(2,3)$ | $7_3$ | $H(1,2) - V(2,3)$ |
| $_3 3$ | $D(1,2) \cdot D(2,3)$ | $8$ | $0A(1,1) - 0B(1,1)$ |
| $_4 4_2$ | $V(1,2) - V(2,3) \cdot C(4,2)$ | $9_2$ | $V(1,2) - 0A(1,1)$ |

**FIG.10A-1.**

**FIG.10A.**

| FIG.10A-1. | FIG.10A-2. |

Characters with the same character code   V(12)-OA(11)

# FIG.10A-2.

# FIG.10B-1.

ICL    IAUT  MB,     K1,            K2,        IL,   LB,      1X, 1Y

```
ICL,   IAUT  MB,     K1,                  K2,            IL,   LB,          1X, 1Y
 4 778 2   0 0 0 0 0 0 0 0 0 0  1 1 2 0 0 0 0 0 0 0 0  3  0421116 7 9 9 0 0 0
 191817161514131211111010101011121313141516171819202122222232323232323232322222222
 21212121222324251515151414131313132021222324251920212 2 0 0 0 0 0 0 0 0 0 0 0 0
 24242424232323222222120191817161514131211110 9 8 7 6 7 8 91011121314151617181920 21
 333435323232323235363738394041424332323332323333494949 49 0 0 0 0 0 0 0 0 0 0 0 0


 81028 2  0 0 0 0 0 0 0 0 0 0  1 1 2 0 0 0 0 0 0 0 0  3  0381313 638 2 0 0 0
 1716151413121110101010101010111213141516171819202122232425252524232221201918 1717
 1718181716151514131211110 9 8 7 6 6 6 5 6 6 7 8 910111213141516171718181818 1818
 191817161514131211110 9 8 7 6 6 5 5 4 4 4 5 5 6 7 7 8 91011121314151617181 919
 312829303132323232333435363738394041424344454646474746464545444342414039 3837


 9  94 2  0 0 0 0 0 0 0 0 0 0  1 1 2 0 0 0 0 0 0 0 0  3  05522 22111 4 3 0 0
 181920202121222223232323232323232221201918171615141312111 0 9 9 8 8 7 6 6 6 6 5
 141516171818191920202020212120212121202020202019202020191919191818171616151414
 2322212019181716151413121110 9 8 7 6 5 5 4 4 4 4 5 5 6 6 7 8 910111213141516
 242323232323242526272829303132333435363738394041424344373635343332313029282727
```

<div align="center">Skeleton Coded Information.</div>

SEE FIG.10B-2.——►

EP 0 079 251 B1

EP 0 079 251 B1

## FIG.10B-2.

```
2 I 2 I 20 20 20 20 2 I 20 2 I 2 I 2 I 2 I
  0 0 0 0 0 0 0 0 0 0 0]
2 2 2 3 24 25 26 27 28 29 30 3 I 32
  0 0 0 0 0 0 0 0 0 0]
```

```
I6 I6 I6 I7 I7 I7 I7 I7 I7 I7 I7
I7 I7 I6 I6 I5 I2 I3 I3 I4 I9 20
20 2 I 22 23 24 25 26 27 28 29 30
36 35 34 33 32 28 27 26 25 26 27
```

```
5  5  6  6  7  8  9 I0 I I I2 I3
I3 20 I9 I4 I3 I2 I I I0  9  8 20
I7 I8 I9 20 2 I 22 23 24 24 25 25
27 I9 I8 47 48 49 49 49 49 49 27
```

—SEE FIG.I0B-1.

## FIG.11. INDIVIDUAL STYLES.

(A) LOOPS      (B) BRANCH

## FIG.12. EFFECTS OF IMPROPER THRESHOLDING.

## FIG.13.

## FIG.10B.

| FIG.I0B-1. | FIG.I0B-2. |
|---|---|

EFFECTS OF IMPROPER SMOOTHING.

## FIG.10C. Character Code Information.

ICL, IAUT, MB, K1, K2, LN, IHT, IWT

```
4  778    2 13 2 0 0 0 0 0 0 0 0 0 0  1112 0 0 0 0 0 0 0 0 0
   4211   0 0 0 0 0 0 0 0 0 0  1911  0 0 0 0 0 0  14 2 0 0 0 0 0 0 0

8  1028   2 13 2 0 0 0 0 0 0 0 0 0 0  1112 0 0 0 0 0 0 0 0 0
   3813   0 0 0 0 0 0 0 0 0 0  1613  0 0 0 0 0 0  16 2 0 0 0 0 0 0 0

9  94     2 13 2 0 0 0 0 0 0 0 0 0 0  1112 0 0 0 0 0 0 0 0 0
   5522   0 0 0 0 0 0 0 0 0 0  2222  0 0 0 0 0 0  19 4 0 0 0 0 0 0 0
```

10

# FIG.14A.

(ST)

(1) RLOOP

MATCH? — YES

(2) MAXLOP

MATCH? — YES

(3) RBUBLE

MATCH? — YES

(4) ADBR2

MATCH? — YES

(5) RTIP

MATCH? — YES

(EXIT)

Noise Code Processing Flowchart.

FIG.14B.

SAMPLE  AFTER OPERATION  REFERENCE

RLOOP

MAXLOP

RBUBLE

ADBR1

ADBR2

RTIP

## FIG.15. TYPES OF CONCATENATION

(A) PERMANENT  (B) NON-PERMANENT

## FIG.16.

1

MD3
MD3+1

SEGMENT 1

SEGMENT 2

MD3+MDM
MD3+MDM+1

SEGMENT 3

MD

## FIG.17. IXR VECTORS

IXR(1)=THE NUMBER OF +1 IN IXD IN SEGMENT 1

| | | | |
|---|---|---|---|
| 2 | −1 | " | 1 |
| 3 | +1 | " | 2 |
| 4 | −1 | " | 2 |
| 5 | +1 | " | 3 |
| 6 | −1 | " | 3 |
| 7 | +1 | IYD | 1 |
| 8 | −1 | " | 1 |
| 9 | +1 | " | 2 |
| 10 | −1 | " | 2 |
| 11 | +1 | " | 3 |
| 12 | −1 | " | 3 |

IXD
+1 RIGHT
−1 LEFT

IYD
+1 DOWN
−1 UP

## FIG.18. IXT VECTORS

IXT(1)=THE NUMBER OF ENTRIES IN SEGMENT 1

| | | |
|---|---|---|
| 2 | " | 1 |
| 3 | " | 2 |
| 4 | " | 2 |
| 5 | " | 3 |
| 6 | " | 3 |
| 7 | " | 1 |
| 8 | " | 1 |
| 9 | " | 2 |
| 10 | " | 2 |
| 11 | " | 3 |
| 12 | " | 3 |

14

EP 0 079 251 B1

FIG.19.     TEMPLATE VECTORS

| CLASS | FORM | MOTION | ① ② ③ ① ② ③<br>→ ← → ← → ← ↓ ↑ ↓ ↑ ↓ ↑<br>1 2 3 4 5 6 7 8 9 10 11 12 |
|---|---|---|---|
| D | ⊃ | | 1 0 0 0 0 1 0 0 1 0 0 0 |
| C | ⊂ | | 0 1 0 0 1 0 0 0 1 0 0 0 |
| D1 | ⌒ | | 0 0 1 0 0 0 0 1 0 0 1 0 |
| C1 | ⌒ | | 0 0 0 1 0 0 0 1 0 0 1 0 |
| C2 | ∪ | | 0 0 1 0 0 0 1 0 0 0 0 1 |
| D2 | ∪ | | 0 0 0 1 0 0 1 0 0 0 0 1 |
| S | S | | 0 1 0 0 0 1 0 0 1 0 0 0 |
| Z | Z | | 1 0 0 0 1 0 0 0 1 0 0 0 |
| Z1 | ⟨ | | 0 0 1 0 1 0 1 0 0 0 0 0 |
| Z2 | ⟨ | | 1 0 0 1 0 0 0 0 0 0 1 0 |
| S1 | ⟨ | | 0 0 1 0 0 1 1 0 0 0 0 0 |
| S2 | ⟨ | | 0 1 1 0 0 0 0 0 0 0 1 0 |

15

**FIG.20A.**

765289

**FIG.20B.**

765289

**FIG.21A.**

0123456789

**FIG.21B.**

0123456709